# EUROPEAN PATENT APPLICATION

(11) **EP 2 533 075 A1**
(43) Date of publication of application: **12.12.2012**
(21) Application number: 11739658.0
(22) Date of filing: 26.01.2011
(51) Int. Cl.: G02B 5/08, B32B 15/08, F24J 2/10, H01L 31/052

(54) **FILM MIRROR, PROCESS FOR PRODUCING SAME, AND SUNLIGHT-REFLECTING MIRROR**

(30) Priority: 03.02.2010 JP 2010022014
(71) Applicant: Konica Minolta Advanced Layers, Inc., Hachioji-shi, Tokyo (JP)
(72) Inventor: ADACHI Hitoshi, Hachioji-shi Tokyo 192-8505 (JP)
(74) Representative: Henkel, Breuer & Partner
(86) International application number: PCT/JP2011/051429
(87) International publication number: WO 2011/096309

(57) **Abstract**

Provided are a film mirror that has high scratch resistance and weather resistance and that can be produced with high productivity, a process for producing same, and a sunlight-reflecting mirror using the film mirror. The disclosed film mirror includes: a resin substrate; a silver reflective layer provided on the substrate; and an outermost layer that is made of a material having a metalloxane skeleton and that is provided on the outermost side on the side closer to a light source than the silver reflective layer. The outermost layer, which is made of the material having a metalloxane skeleton, has a contact angle with water of 80° or above and below 170° and has a coefficient of kinetic friction of 0.10 to 0.35 inclusive.

## Description

### FIELD OF THE INVENTION

The present invention relates to a film mirror which has excellent bruise resistance and weather resistance and has high productivity, a method for producing the same and a sunlight reflecting mirror using the film mirror.

### TECHNICAL BACKGROUND

In recent years, global warming develops into the much more serious situation, and has the potential to become threatening even survival of future human beings. It is thought that the proximate cause is carbon dioxide (CO₂) in the atmosphere emitted from the fossil fuel which has been used so much as an energy source in the 20th century. Therefore, it is thought that it is no longer allowed to continue using a fossil fuel as it is in the near future. On the other hand, since the energy consumption increases accompanying the rapid economic growth of so-called developing countries such as China, India and Brazil, it becomes factual to drain the petroleum and natural gas which were once considered to be inexhaustible.

The solar energy is considered to be natural energy source which is most stable as an alternative energy source of a fossil fuel and has much quantity. Especially, since the vast desert spreads out near the equator called Sun Belt Places in the world, the solar energy poured here is quite inexhaustible supply. If only several percent of the desert which spreads in the southwestern U.S. is used for this purpose, it is thought possible to acquire energy of 7,000 GW. Moreover, if only several percent of the desert of Arabian Peninsula and North Africa is used, it is thought that all the energy that all mankind uses can be provided.

However, even though solar energy is considered as a possible alternative energy, in view of utilizing it in social activities, it has problems such that (1) energy density of solar energy is low and (2) storage and transfer of solar energy are difficult.

In order to resolve the problem that the energy density of solar energy is low, proposed is a huge reflective device which can collect solar energy.

Since reflective device is exposed to ultraviolet radiation or heat by sunlight, a rainstorm, and a sandstorm, etc., glass mirrors have been used conventionally. While a glass mirror has high durability over environment, glass mirror had the problem that the construction costs of a plant increases, because damage occurs during the transportation or the suitable strength to hold a heavy mirror is required to the stand.

In order to resolve the above-mentioned problem, investigated was to replace a glass mirror to a reflective sheet made of resin (for example, refer to Patent Document 1). Since the resin is weak to bruise resistance and a problem by decreasing reflectance due to bruises on the surface when water washing was carried out by using a cleaning utensils such as a mop, in order to remove sand and dust Further a problem by corrosion of silver occurs when metal such as silver is used for a reflective layer, due to penetrating oxygen, a steam, or hydrogen sulfide, etc. through the resin layer. Therefore, it was difficult to apply the mirror made of resin.

To the above problems, it was disclosed a hard coat film having excellent weather resistance and providing a silica layer which can be used outdoors (for example, refer to Patent Document 2). However, when the above silica layer is provided on the surface, since the surface becomes hydrophilic and ability to strain water becomes worse at the time of water washing, there was a problem to be bruised immediately by the polish action by sand or dust

Moreover, with respect to a corrosion in the case of using metal layers such as silver for a reflective layer, it is known a method of preparing an inorganic oxide layer as a barrier layer in a light source side of a reflective layer (for example, refer to Patent Document 3). However, the above-mentioned problem of the bruise resistance was not described.

### PRIOR TECHNICAL DOCUMENT

### PATENT DOCUMENT

Patent Document 1: Unexamined Japanese Patent Application Publication (hereinafter referred to as JP-A) No. 2005-59382
Patent Document 2: JP-A No. 2004-188609
Patent Document 3: Japanese Registration Patent No. 3311172

### SUMMARY

### PROBLEMS TO BE SOLVED BY THE PRESENT INVENTION

In view of the foregoing, the present invention was achieved. One of the objects of the present invention is to provide a film mirror which has excellent bruise resistance and weather resistance and has high productivity, a method for producing the same and a sunlight reflecting mirror using the film mirror.

### MEANS TO SOLVE THE PROBLEMS

The above object has been attained by the following constitutions:
1. A film mirror comprising a resin base material, a silver reflective layer provided on the resin base material, and an outermost layer which comprises a material having a metalloxane skeleton and is provided on the outermost side on the side closer to a light source than the silver reflective layer, wherein the outermost layer comprising the material having the metalloxane skeleton has a contact angle with water in the range from not less than 80° to less than 170° and has a dynamic friction coefficient in the range from not less than 0.10 to not more than 0.35.
2. The film mirror of item 1 having a pencil hardness in the range from not less than H to not more than 7H.
3. The film mirror of item 1 or 2 having the dynamic friction coefficient in the range from not less than 0.15 to not more than 025.
4. The film mirror of any one of items 1 to 3 comprising a gas barrier layer provided on the side closer to the light source than the silver reflective layer.
5. The film mirror of any one of items 1 to 4 wherein the resin base material is provided on the side closer to the light source than the silver reflective layer.
6. The film mirror of any one of items 1 to 5, wherein the resin base material or at least one layer on the resin base material has an ultraviolet absorption agent.
7. The film mirror of any one of items 1 to 6, wherein an adjacent layer to the silver reflective layer contains a corrosion inhibitor of silver.
8. A method for producing the film mirror of any one of items 1 to 7 comprising a step of forming the silver reflective layer by a silver vapor deposition process.
9. A sunlight reflecting mirror using the film minor of any one of items 1 to 7 or produced by the method of item 8, formed by sticking the film mirror on a metal base via a sticking layer coated on the opposite side of the resin base material to the silver reflective layer.

### EFFECTS OF THE INVENTION

The present invention made it possible to provide the film mirror which has excellent bruise resistance and weather resistance and has high productivity, the method for producing the same and the sunlight reflecting mirror using the film mirror.

### PREFFERED EMBODIMENT OF THE INVENTION

In view of the foregoing the inventors of the present invention conducted diligent investigations. As a result, the following was discovered, and the present invention was achieved. The film mirror which has excellent bruise resistance and weather resistance and has high productivity can be achieved by the film mirror which comprises a resin base material, a silver reflective layer provided on the resin base material, and an outermost layer which comprises a material having a metalloxane skeleton and is provided on the outermost side on the side closer to a light source than the silver reflective layer, wherein the outermost layer comprising the material having the metalloxane skeleton has a contact angle with water in the range from not less than 80° to less than 170° and has a dynamic friction coefficient in the range from not less than 0.10 to not more than 035.

Hereafter, the present invention and the components thereof and the embodiments will now be detailed.

### [Outermost layer comprising material having Metalloxane skelton]

The film mirror of the present invention is characterized by an outermost layer comprising a material having a metalloxane skeleton provided on the outermost side on the side closer to a light source than the silver reflective layer.

The outermost layer comprising a material having a metalloxane skeleton can be formed by coating and drying polymetalloxane such as silicon, titanium, zirconium and aluminum, polysilazane, perhydro polysilazane, alcoxysilane, alkyl alcoxysilane, or polysiloxane represented by Formula (1).

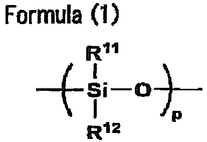

In Formula (1), R¹¹ and R¹² may be the same or may differ from each other, and represents an organic group such as hydrogen, alkyl group or aryl group.

The film mirror of the present invention is characterized by that the outermost layer comprising the material having the metalloxane skeleton provided on the outermost side on the side closer to a light source than the silver reflective layer has a contact angle with water in the range from not less than 80° to less than 170° and has a dynamic friction coefficient in the range from not less than 0.10 to not more than 0.35.

Into a coating liquid of outermost layer comprising the material having the metalloxane skeleton, 0.1 - 10% by mass of surface treatment agent such as water repellent agent or leveling agent is added based on the material having the metalloxane skeleton, and surface energy is lowered. The coating liquid is coated and dried, whereby the contact angle with water on the outermost layer can be controlled in the range from not less than 80° to less than 170°. Moreover, the contact angle with water on the outermost layer can also be controlled in the range from not less than 80° to less than 170° by coating a surface treatment agent or immersing in the surface treatment solution on the outermost layer comprising the material having the metalloxane skeleton.

As a surface treatment agent, exemplified are: polyacrylate based polymer such as the poly alkylacrylate; polyvinyl ether based polymer such as polyalkylvinyl ether, silicone based polymer such as dimethyl polysiloxane, methylphenyl polysiloxane and organic modified polysiloxane in which polyether, polyester, or aralkyl are introduced. The surface treatment agent which can be used in the present invention contains a fluorine atom in these polymers. The leveling agent having fluorine atom can be prepared by copolymerizing monomer having a group having a fluorine atom, for example.

Specific examples of products include: Surflon "S-381 ", "S-382", "SC-101", "SC-102", "SC-103", "SC-104" (all are produced by Asahi Glass Co., Ltd.), Fluorad "FC-430", "FC-431", "FC-173" (all are Fluoro chemical produced by Sumitomo 3M), Eftop "EF352", "EF301", "EF303" (all are produced by Shin-Akita Kasei Co.), schwegolfer "8035", "8036" (all are produced by Schwegman), "BM1000", "BM1100" (all are produced by BM Hymie Co.), Megafac "F-171", "F-470", "RS-75", "RS-72-K" (all are produced by DIC, Inc.), BYK340 (produced by BYK Chemie Japan), and "ZX-049", "ZX-001", "ZX-017" (all are produced by Fuji Kasei Kogyo).

Further, on the outermost layer comprising the material having the metalloxane skeleton, a mixed gas of fluorine compound and silicon compound or a compound having fluorine and silicon is vapor deposited, whereby surface energy is lowered and the contact angle with water on the outermost layer can be controlled in the range from not less than 80° to less than 170°.

In order to form a thin film on the outermost layer comprising the material having the metalloxane skeleton by a vapor deposition method, an atmospheric pressure plasma discharge processing is desirable.

When the film forming gas is a gas, it can be introduced into an electric discharge space as it is. When the film forming material is a liquid or a solid, it is used via evaporation by means of heating, reduced pressure or ultrasonic exposure. Or it may be used by diluting with a solvent. In this case, it may be used as a mixture gas with a rare gas by evaporating with a carburettor. As a solvent, organic solvents such as methanol, ethanol, isopropanol, butanol, n-hexane,and acetone and mixed solvent thereof can be used, but not limited thereto.

In view of forming a uniform thin film on a base material by the electric discharge plasma treatment, a content of the thin film forming gas in the mixed gas is preferably 0.01 - 10% by volume, still more preferably 0.01 - 1% by volume.

These gases may be supplied to the electric discharge space as preliminary prepared gas, or two or more gases may be mixed in neighborhood of the electric discharge space. Addition gas such as hydrogen and oxygen is preferably introduced into the electric discharge space after preliminary diluted by nitrogen or rare gas, since physical properties of formed thin film is stabilized in the case of a continuous film formation.

Moreover, it is preferable that the gas is supplied in the electric discharge space by warming at room temperature to 200 °C, more preferable at 50 - 150 °C, still more preferable at 70 - 120 °C, and specifically preferable at 90 - 110 °C. Higher is the temperature, the film having more precise and excellent in hardness can be obtained. However, when the temperature is too high, the base material may be distorted. By adjusting the processing strength of the atmospheric pressure plasma electric discharge processing, the contact angle with water of the outermost layer is controlled in the range from more than 70° to less than 170°.

The contact angle with water of the outermost layer is necessary in the range from more than 70° to less than 170°, preferable in the range of 90° - 150°. In the case ofless than 70°, water repellence is inadequate and in the case of more than 170°, it is difficult to achieve.

Moreover, in order to improve bruise resistance of the outer most layer, a dynamic friction coefficient is necessary in the range from more than 0.10 to not more than 0.35, preferably in the range of 0.15 - 0.25. In the case of exceeding 0.35, practical effect of bruise resistance cannot be obtained and in the case of less than 0.10, it is not preferable because a winding slippage of the film occurs in a production process due to a surface being too highly slippery.

The dynamic friction coefficient between the film surfaces can be controlled in the range from more than 0.10 to not more than 0.35 by using polymetalloxane such as silicon, titanium, zirconium and aluminum, polysilazane, perhydro polysilazane, alcoxysilane, alkyl alcoxysilane, or polysiloxane.

The contact angle with water of the present invention can be determined by using Contact angle meter CA-W produced by Kyowa Interface Science Co., Ltd, and by dropping a water drop of 3 µl onto a film mirror under the ambient of 23 °C and 55% RH.

The dynamic friction coefficient of the present invention is determined as follows: by using Surface property measurement equipment (HEIDON-14D) produced by Shinto Scientific Co., Ltd.., a piece of film mirror is stuck on a sample stage the outermost layer side up. Another piece of film mirror is attached on an indenter. These two film mirrors are overlapped so that their outermost layers may contact. Load of about 160 g/cm² is added on it and is reciprocatory slid 10 times at a rate of 3 m/min. The dynamic friction coefficient is calculated as an average dynamic friction coefficient of 10 reciprocatory slides.

In the present invention, the outermost layer comprising the material having the metalloxane skeleton includes a treated outermost layer by above-mentioned surface treatment agent such as water repellent agent or leveling agent, and an outermost layer vapor deposit treated by using compound having fluorine and silicon.

### [Construction of Film mirror]

The film mirror of the present invention is characterized by that a film minor comprising a resin base material, a silver reflective layer provided on the resin base material, and an outermost layer which comprises a material having a metalloxane skeleton and is provided on the outermost side on the side closer to a light source than the silver reflective layer, wherein the outermost layer comprising the material having the metalloxane skeleton has a contact angle with water in the range from not less than 80° to less than 170° and has a dynamic friction coefficient in the range from not less than 0.10 to not more than 0.35. It is also a desirable embodiment to provide a specific functional layer such as a gas barrier layer, a corrosion inhibitor layer, an ultraviolet absorption layer, or an upper adjacent layer, other than a resin base material, a silver reflective layer, and the outermost layer comprising the material having the metalloxane skeleton as a composition layer. Herein, the upper adjacent layer is referred to as a layer which adjoins a side far from the resin base material of a silver reflective layer and prevents corrosion degradation of silver, as well as contributes to bruise prevention of a silver reflective layer and to improve in adhesive strength with the barrier layer and the bruise prevention layer which are formed in the outside of the upper adjacent layer.

### (Resin base material)

As a resin base material related to the present invention, well-known various resin films can be used. For example, listed are a cellulose ester based film, a polyester based film, a polycarbonate based film, a polyarylate based film, a polysulfone (also including polyether sulfone) based film, polyester film such as polyethylene terephthalate and polyethylene naphthalate, a polyethylene film, a polypropylene film, cellophane, a cellulose diacetate film, a cellulose triacetate film, a cellulose acetate propionate film, a cellulose acetate butylate film, a polyvinylidene chloride film, a polyvinyl alcohol film, an ethylene vinyl alcohol film, a sydiotactic polystyrene based film, a polycarbonate film, a norbornene based resin film, a poly methyl pentene film, a polyether ketone film, a polyether ketone imido film, a polyamide film, a fluororesin film, a nylon film, a polymethylmethacrylate film, and an acrylic film. Of these, a polycarbonate based film, a polyester based film, a norbornene based resin film, and a cellulose ester based film are preferable.

Specifically it is preferable to use a polyester based film and a cellulose ester based film. The film may be manufactured by a melt casting method or a solution casting method..

The thickness of the resin base material may be arranged as a suitable thickness according to a kind and a purpose of resin. For example, it is generally in the range of 10 - 300 µm, preferably in 20 - 200 µm, more preferably in 30 - 100 µm.

### (Silver reflective layer)

As a method for forming the silver reflective layer concerning the present invention, both of a wet and a dry method can be used.

A wet method is a general term for a plating method, and is a method of depositing a metal from a solution and forming a film. Specific example includes a silver mirror reaction

On the other hand, a dry method is a general term for a vacuum film formation method. Specific example includes: a resistance heating type vacuum deposition method, an electron beam heating type vacuum deposition method, an ion plating method, an ion beam assistant vacuum deposition method, and a sputtering method. Of these, the vacuum deposition method in which a film can be formed continuously via roll to roll process is especially preferably used for the present invention. That is, as a production method of the film mirror for the present invention, preferred is a production method which has a process of forming the silver reflective layer by the silver vacuum evaporation.

In view of a reflectance, a thickness of the silver reflective layer is preferably 10 - 200 nm, and more preferably 30 - 150 nm.

In the present invention, a silver reflective layer preferably may locate in the side or in the opposite side of the light incidence side to a base material. From the purpose for preventing deterioration of the resin by light, the silver reflective layer preferably locates in the side of the light incidence side due to the base material being a resin.

### (Corrosion inhibitor)

As a corrosion inhibitor of a silver reflective layer used for the film mirror of the present invention, a corrosion inhibitor which has an adsorbent group to silver and an antioxidant are preferably used.

Herein, "corrosion" refers to as a phenomenon in which a metal (silver) is chemically or electrochemically corroded by an environmental substance or deteriorated in quality of the material (refer to JIS Z 0103-2004).

As for the film mirror of the present invention, it is a preferable mode in which the above-mentioned adhesive layer contains an antioxidant and also the above-mentioned upper adjacent layer contains the corrosion inhibitor having an adsorbent group to silver.

Although the optimum amount changes with compounds, generally a content of a corrosion inhibitor is preferable in the range of 0.1-1.0 g/m².

### (Corrosion inhibitor having adsorbent group to silver)

Corrosion inhibitor having an adsorbent group to silver is preferably selected from at least one kind or a mixture thereof of followings: amine and derivative thereof; compound having pyrrole ring, compound having triazole ring, compound having pyrazole ring, compound having thiazole ring, compound having imidazole ring, compound having indazole ring, copper chelate compounds, thioureas, compound having mercapto group and naphthalene based compound.

Specific examples of amine and a derivative thereof include: ethylamine, lauryl amine, tri-n-butylamine, o-toluidine, diphenylamine, ethylenediamine, diethylenetriamine, triethylenetetramine, tetraethylenepentamine, monoethanolamine, diethanolamine, triethanolamine, 2N-dimethylethanolamine, 2-amino-2-methyl-1,3-propanediol, acetamide, acrylamide, benzamide, p-ethoxy chrysoidine, dicyclohexyl ammonium nitride, dicyclohexyl ammonium salicylate, monoethanolamine benzoate, dicyclohexyl ammonium benzoate, diisopropyl ammonium benzoate, a diisopropyl ammonium nitride, cyclohexylamine carbamate, nitronaphthalene ammonium nitride, cyclohexylamine benzoate, dicyclohexyl ammonium cyclohexane carboxylate, a cyclohexylamine cyclohexane carboxylate, dicyclohexyl ammonium acrylate, a cyclohexylamine acrylate, or mixture thereof.

Specific examples of compound having a pyrrole ring include: N-butyl- 2,5-dimethyl pyrrole, N-phenyl-2,5-dimethyl pyrrole, N-phenyl-3-formyl- 2,5-dimethyl pyrrole, and N-phenyl-3,4-diformyl-2,5-dimethyl pyrrole or mixture thereof

Specific examples of compound having triazole ring include: 1,2,3-triazole, 1,2,4-triazole, 3-mercapto-1,2,4-triazole, 3-hydroxy-1,2,4-triazole, 3-methyl-1,2,4-triazol, 1-methyl-1,2,4-triazole, 1-methyl-3-mercapto-1,2,4-triazole, 4-methyl-1,2,3-triazole, benzotriazol, tolyl triazole, 1-hydroxy benzotriazol, 4,5,6,7-tetrahydro triazole, 3-amino-1,2,4-triazole, 3-amino-5-methyl-1,2,4-triazole, carboxy benzotriazol, 2-(2'-hydroxy-5'-methylphenyl) benzotriazol, 2-(2'-hydroxy-5'-tert-butylphenyl) benzotriazol, 2-(2'-hydroxy-3',5'-di-tat-butylphenyl) benzotriazol and 2-(2'-hydroxy-4-octoxyphenyl) benzotriazol or mixture thereof.

Specific examples of compound having pyrazole ring include: pyrazole, pyrazoline, pyrazolone, pyrazolidine, pyrazolidone, 3,5-dimethyl pyrazole, 3-methyl-5-hydroxy pyrazole, and 4-amino pyrazole, or mixture thereof

Specific examples of compound having thiazole ring include: thiazole, thiazoline, thiazolone, thiazolidine, thiazolidone, iso thiazole, benzothiazole, 2-NN-diethyl thiobenzothiazole, p-dimethylamino benzal rhodanine, and 2-mercaptobenzothiazole, or mixture thereof

Specific examples of compound having imidazole ring include: imidazole, histidine, 2-heptadecyl imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 2-phenyl-4-methyl-5-hydromethyl imidazole, 2-phenyl-4,5-dihydroxymethyl imidazole, 4-formyl imidazole, 2-methyl-4-formyl imidazole, 2-phenyl-4-formyl imidazole, 4-methyl-5-formyl imidazole, 2-ethyl-4-methyl-5-formyl imidazole, 2-phenyl 4-methyl-4-formyl imidazole, and 2-mercapto benzimidazole, or mixture thereof.

Specific examples of compound having indazole ring include: 4-chloroindazole, 4-nitro indazole, 5-nitro indazole, and 4-chloro-5-nitro indazole, or mixture thereof.

Specific examples of copper chelate compounds include: acetylacetone copper, ethylenediamine copper, phthalocyanine copper, ethylenediamine tetraacetate copper, and hydroxyquinoline copper, or mixture thereof.

Specific examples of thioureas include: thiourea and guanyl thiourea, or mixture thereof.

By also adding the material already indicated above, specific examples of compound having mercapto group include: mercaptoacetic acid, thiophenol, 1,2-ethanediol, 3-mercapto-1,2,4-triazole, 1-methyl-3-mercapto-1,2,4-triazole, 2-mercaptobenzothiazole, 2-mercapto benzimidazole, glycol dimercaptoacetate, and 3-mercapto propyl trimethoxy silane, or mixture thereof

Specific example of naphthalene based compound includes thionalide.

### <Antioxidant>

An antioxidant can also be used as corrosion inhibitor of a silver reflective layer used for the film mirror of the present invention.

As an antioxidant in the present invention, it is preferable to use at least one kind of a phenol based antioxidant, a thiol based antioxidant, and a phosphite based antioxidant

Specific examples of phenol based antioxidant include: 1,1,3-tris (2-methyl-4-hydroxy-5-t-butylphenyl) butane, 2,2'-methylene bis(4-ethyl-6-t-butylphenol), tetrakis [methylene 3-(3',5'-di-t-butyl-4'-hydroxyphenyl) propionate] methane, 2,6-di-t-butyl-p-cresol, 4,4'-thio bis (3-methyl-6-t-butylphenol), 4,4'-butylidene bis (3-methyl-6-t-butylphenol),1,3,5-tris(3',5'-di-butyl-4'-hydroxybenzyl)-S-triazines-2,4,6-(1H,3H,5H) trione, stearyl-β-(3,5-di-butyl-4-hydroxy phenyl) propionate, triethylene glycol bis [3-(3-t-butyl-5-methyl-4-hydroxy phenyl) propionate], 3,9-bis [1,1-dimethyl-2-[β-(3-t-butyl-4-hydroxy-5-methylphenyl) propionyloxy] ethyl]-2,4,8,10-tetraoxaspiro [5,5] undecane, and 1,3,5-trimethyl-2,4,6-tris(3,5-di-butyl-4-hydroxybenzyl) benzen. Of these, a phenol based antioxidant having molecular weight of 550 or more is preferable.

Specific examples of thiol based antioxidant include: disteraryl-3,3'-thiodipropionate and pentaerythritol-tetrakis (β-lauryl-thiopropionate).

Specific examples of phosphite based antioxidant include: tris (2,4-di-butylphenyl) phosphite, distearyl pentaerythritol diphosphite, di (2,6-di-butylphenyl) pentaerythritol diphosphite, bis- (2,6-dibutyl-4-methylphenyl)-pentaerythritol diphosphite, tetrakis (2,4-di-butylphenyl)-4,4'-biphenylene-diphosphonite, and 2,2'-methylene bis (4,6-di-butylphenyl) octylphosphite.

In addition, in the present invention, the above-mentioned antioxidant can also be used in combination with the following light stabilizer.

Specific examples of hindered amine based stabilizer include: bis (2,2,6,6 tetra-methyl-4-piperidyl) sebacate, bis(1,2,2,6,6-pentamethyl-4-piperidyl) sebacate, bis (1,2,2,6,6-pentamethyl-4-piperidyl)-2-(3,5-di-t-butyl-4-hydroxybenzyl)-2-n-butyl malonate, 1-methyl-8-(1,2,2,6,6-pentamethyl-4-piperidyl)-sebacate, 1-[2-[3-(3,5-di-t-butyl-4-hydroxyphenyl)propionyloxy] ethyl]-4-[3-(3,5-di-t-butyl-4-hydroxyphenyl) propionyloxy]-2,2,6,6-tetramethyl piperidine, 4-benzoyl oxy-2,2,6,6-tetra-methyl piperidine, tetrakis (2,2,6,6-tetramethyl-4-piperidyl)-1,2,3,4-butane-tetra-carboxylate, triethylenediamine, and 8-acetyl-3-dodecyl-7,7,9,9-tetramethyl-1,3,8-triazaspiro) [4,5] decane-2,4-dion.

Further, as nickel based ultraviolet stabilizer, [2,2'-thio bis (4-t-octylphenolate)]-2-ethylhexylamine nickel (II), nickel complex-3,5-di-t-butyl-4-hydroxybenzyl phosphoric acid monoethylate, and nickel dibutyl-dithio carbamate are applicable.

A hindered amine based stabilizer only containing tertiary amine is preferable as a light hindered amine based stabilizer. Specifically preferred are bis (1,2,2,6,6-pentamethyl-4-piperidyl)-sebacate, bis (1,2,2,6,6-pentamethyl-4-piperidyl)-2-(3,5-di-t-butyl-4-hydroxybenzyl)-2-n-butyl malonate, or condensate of 1,2,2,6,6-pentamethyl-4-piperidinol/tridecyl alcohol and 1,2,3,4-butane tetra carboxylic acid.

### (Gas barrier layer)

As for the film mirror of the present invention, it is preferable to have a gas barrier layer.

The gas barrier layer according to the present invention is used to prevent deterioration of the resin base material and the various functional elements protected by the resin base material from a change ofhumidity, especially from high humidity. As long as it may maintain above features, the gas barrier layer may have special function or usage, and various modes of gas barrier layer may be applicable. In the present invention, it is preferable to prepare a gas barrier layer on the upper side of the above-mentioned silver reflective layer.

As dampproofing of the gas barrier layer, it is preferable to control the dampproofing of the gas barrier layer so that a steam transmittance in 40 °C, RH 90% is 100 g/m²-day/µm or less preferably 50 g/m²·day/µm or less, more preferably 20 g/m² day/µm or less. Further, oxygen transmittance is preferable 0.6 ml/m²/day/atm or less under a condition of temperature of 23 °C, 90% RH.

A method for forming the gas barrier layer according to the present invention is not specifically limited, however it is preferable to apply a method in which a ceramic precursor of an inorganic oxide film is coated and then an inorganic oxide film is formed by heating and/or irradiating ultraviolet to the coated film.

### <Ceramic precursor>

The gas barrier layer according to the present invention can be formed by applying general heating method after coating a ceramic precursor for forming an inorganic oxide film, but preferably by applying a local heating. The ceramic precursor is preferable sol-state organometallic compound or polysilazane.

### <Organometallic compound>

The organometallic compound according to the present invention preferably contains at least one element of silicon (Si), aluminum (Al), lithium (Li), zirconium (Zr), titanium (Ti), tantalum (Ta), zinc (Zn), barium (Ba), indium (In), tin (Sn), lanthanum (La), yttrium (Y), and niobium (Nb). It is preferable that the organometallic compound contains at least one element of silicon (Si), aluminum (Al), lithium (Li), zirconium (Zr), titanium (Ti), zinc (Zn), and barium (Ba). Furthermore, it is preferably to contain at least one element of silicon (Si), aluminum (Al), and lithium (Li).

An organometallic compound is not specifically limited as long as it is possible to hydrolysis, but metal alkoxide is mentioned as a preferable organometallic compound.

The above-mentioned metal alkoxide is represented by Formula (1).

Formula (1): MR²ₘ(OR¹)ₙ₋ₘ

In Formula (1), M represents a metal having oxidation number n. R¹ and R² each represents an alkyl group independently. m represents an integer of 0 to (n-1). R¹ and R² may be the same or differ. As R¹ and R², preferable is an alkyl group having four or less carbon atoms, and more preferable is a lower alkyl group such as methyl group CH₃ (hereinafter refer to as Me), ethyl group C₂H₅ (hereinafter refer to as Et), propyl group C₃H₇ (hereinafter refer to as Pr), isopropyl group i-C₃H₇ (hereinafter refer to as i-Pr), butyl C₄H₉ (hereinafter refer to as Bu), and isobutyl group i-C₄H₉ (hereinafter refer to as i-Bu).

Specific examples of the metal alkoxide represented by Formula (1) include: lithium ethoxide LiOEt, niobium ethoxide Nb(OEt)₅, magnesium isopropoxide Mg(OPr-i)₂, aluminum isopropoxide Al(OPr-i)₃, zinc propoxide Zn(OPr)₂, tetraethoxy silane Si(OEt)₄, titanium isopropoxide Ti(OPr-i)₄, barium ethoxide Ba(OEt)₂, barium isopropoxide Ba(OPr-i)₂, triethoxy borane B(OEt)₃, zirconium propoxide Zn(OPr)₄, lanthanum propoxide La(OPr)₃, yttrium propoxide Y(OPr)₃, and lead isopropoxide Pb(OPr-i)₂. Each of these metal alkoxide is available on the market and can be obtained easily. Moreover, the low condensate obtained by partially hydrolyzing metal alkoxide is also marketed, and it is also possible to use this as a raw material.

### <Inorganic oxide>

The inorganic oxide according to the present invention is characterized by being formed by local heating from the sol which uses the above-mentioned organometallic compound as a raw material. Therefore, it is characterized by an oxide of elements such as silicon (Si), aluminum (Al), zirconium (Zr), titanium (Ti), tantalum (Ta), zinc (Zn), barium (Ba), indium (In), tin (Sn), and niobium (Nb) which are contained in the organometallic compound,.

For example, they are silicon oxide, aluminum oxide, or zirconium oxide. Of these, silicon oxide is preferable.

In the present invention, as a method of forming an inorganic oxide from an organometallic compound, it is preferable to apply a so-called sol-gel method and a method of coating polysilazane.

### <Sol-gel method>

Herein, "Sol-gel method" refers to as a method for preparing metal oxide glass having a fixed form (such as film, grain, or fiber) in which sol of hydroxide is obtained by hydrolyzing an organometallic compound, then it is dehydrated into gel, further followed by heat-treating the gel. Further, a multicomponent metal oxide glass can be prepared by a method of mixing several different sol solutions, or a method of adding other metal ion.

Specifically, it is preferable to prepare an inorganic oxide by a sol-gel method having following steps.

Namely, it is especially preferable to manufacture by a sol-gel method which comprises a process of obtaining a reaction product by hydrolysis and dehydration condensation of organometallic compound in a reaction liquid containing at least water and organic solvent by using halogen ion as a catalyst under existence of boron ion, while adjusting pH in 4.5 - 5.0; and a process of heating and vitrifying the reaction product at a temperature of 200 °C or less, in view that heat treatment with high temperature does not cause micropores, or deterioration of the film.

In the above-mentioned sol-gel method, an organometallic compound used as a raw material is not particularly limited as long as it can be hydrolyzed, but the above-mentioned metal alkoxide is mentioned as preferable organometallic compound.

In the above-mentioned sol-gel method, the above-mentioned organometallic compound may be used for a reaction as it is, but it is preferable to use it by diluting with a solvent in order to control a reaction easily. A solvent which can dissolve the above-mentioned organometallic compound and can be uniformly mixed with water is applicable to the solvent for dilution. Specific examples of the solvent for dilution preferably used are: aliphatic lower alcohol, such as methanol, ethanol, propanol, isopropanol, butanol, isobutanol, ethylene glycol, propylene glycols, and mixtures thereof Moreover, the mixed solvent of butanol, cellosolve, and butyl cellosolve or the mixed solvent of xylol, cellosolve acetate, methyl isobutyl ketone, and cyclohexane can also be used.

In the above-mentioned organometallic compound, when metals are Ca, Mg, Al, it reacts with water in a reaction liquid and generates hydroxide, or when carbonate ion CO₃²⁻ exists, it forms carbonate and precipitate. Therefore, it is preferable to add alcoholic solution of triethanolamine as a masking reagent in the reaction liquid. When the above-mentioned organometallic compound is mixed and dissolved into a solvent, concentration of organometallic compound is preferable 70% by mass or less, more preferable to use by diluting in the range of 5 - 70% by mass.

The reaction liquid used in the above-mentioned sol-gel method contains at least water and an organic solvent. The above-mentioned organic solvent may form a uniform solution with water, acid or alkali. Generally listed are the same species as aliphatic lower alcohols used for dilution of the above-mentioned organometallic compound. In above-mentioned aliphatic lower alcohol, propanol, isopropanol, butanol, and isobutanol having more carbon numbers than methanol and ethanol are preferably used. It is because that growth of the formed metal oxide glass film is stable. In the above-mentioned reaction liquid, concentration of water is preferable in the range of 0.2 - 50 mol/L.

In the above-mentioned sol-gel method, an organometallic compound is hydrolyzed by a halogen ion as a catalyst under existence of boron ion in the above-mentioned reaction liquid. As a compound which gives above-mentioned boron ion B³⁺, trialkoxy borane B(OR)₃ is preferably listed. Of these, triethoxy borane B(OEt)₃ is more preferable. Moreover, B³⁺ ion concentration in the above-mentioned reaction liquid is preferable in the range of 1.0 -10.0 mol/L.

As the above-mentioned halogen ion, fluorine ion and/or chlorine ion are preferably listed. That is, fluorine ion and chlorine ion may be used singly or in mixture. Compound which can generate fluorine ion and/or chlorine ion in the above-mentioned reaction liquid may be applicable. For example, preferably listed are ammonium hydrogen fluoride NH₄HF-HF and sodium fluoride NaF as a fluorine ion source, and ammonium chloride NH₄Cl as a chlorine ion source.

Concentration of the above-mentioned halogen ion in the above-mentioned reaction liquid depends on a film thickness comprising an inorganic composite having an inorganic matrix and other conditions, but generally it is in the range of 0.001 - 2 mol/kg, especially preferable 0.002 - 0.3 mol/kg based on the total mass of the above-mentioned reaction liquid including a catalyst When concentration of a halogen ion is lower than 0.001 mol/kg, a hydrolysis of an organometallic compound will become difficult to be fully carried out and film formation will become difficult. When concentration of halogen ion exceeds 2 mol/kg, formed inorganic matrix (metal oxide glass) tends to become uneven. Thus, neither case is undesirable.

When boron used during reaction is designed to be remained in a composition of an obtained inorganic matrix as B₂O₃ component, the resultant may be used as product with the organic boron compound according to the added content. When boron has to be eliminated, after forming film, the film is heated under an existence of methanol as solvent or immersed in methanol, thereby boron can be evaporated and removed as boron methyl ester.

In the process of obtaining a reaction product by hydrolysis and dehydration condensation of the organometallic compound, a base compound solution is prepared by mixing and dissolving a predetermined quantity of the above-mentioned organometallic compound into a mixed solvent containing predetermined quantity of water and predetermined quantity of organic solvent. The base compound solution and predetermined quantity of a reaction liquid containing predetermined quantity of the halogen ion are mixed by a predetermined ratio and fully agitated to a uniform reaction solution. Then, pH of a reaction solution is adjusted to the desired value by using acid or alkali, and after riping for several hours, the reaction product is obtained. Predetermined quantity of the above-mentioned boron compound is preliminary mixed and dissolved in the base compound solution or the reaction liquid. Moreover, when using alkoxy boran, it is advantageous to dissolve in the base compound solution with other organometallic compounds.

pH of the above-mentioned reaction liquid is chosen by the purpose. When the purpose is a film formation which comprises an inorganic composite having an inorganic matrix (metal oxide glass), it is preferable to adjust pH in the range of 4.5 - 5, for example, by using acids, such as hydrochloric acid and followed by riping. In this case, it is convenient to use, for example, a mixture of methyl red and bromocresol green as an indicator.

Further, in the above-mentioned sol-gel method, a reaction product can also be manufactured easily and continuously by adding the base composition solution and the reaction liquid (including B³⁺ and halogen ion) which has the same component with the same concentration one by one at same rate, while adjusting to the predetermined pH. Herein, concentration of the above-mentioned reaction solution can be changed in the range of ±50% by mass, concentration of water (including acid or alkali) can be changed in the range of ±30% by mass and concentration of a halogen ion can be changed in the range of ±30% by mass.

Next, the reaction product prepared via previous process (the reaction solution after ripning) is heated to the temperature of 200 °C or less, and dried and vitrified. It is preferable to raise a temperature gradually and carefully especially in the temperature range of 50 - 70 °C, and after passing through a predrying (solvent vaporization) process, further to raise a temperature. In a case of film formation, this drying process is important to obtain the film with non-pores. After the predrying process, it is preferable to heat and dry at a temperature of 70 - 150 °C, more preferable 80 - 130 °C.

### <Method for coating polysilazane>

The gas barrier layer according to the present invention preferably contains an inorganic oxide formed by local heating of a coated film after coating a ceramic precursor which forms an inorganic oxide film by heating.

When the ceramic precursor contains a polysilazane, it is preferable to apply a method for forming a glass-like transparent coated film on the resin base material comprising steps of: covering the resin base material with a solution which includes polysilazane represented by Formula (I) and a catalyst if needed in the organic solvent, removing the solvent by evaporation to leave a polysilazane layer having a thickness of 0.05 - 3.0 µm on the resin base material, and local heating the polysilazane layer in the atmosphere containing a steam under existence of oxygen, active oxygen, and in some case, nitrogen.

Formula (I): - (SiR₁R₂-NR₃)ₙ -

In above Formula, R₁, R₂, and R₃ may be the same or differ and each independently represents a hydrogen or a group which is substituted depending on the case selected from a group of alkyl group, aryl group, vinyl group or (trialkoxy silyl) alkyl group; preferably hydrogen, methyl, ethyl, propyl, isopropyl, butyl, iso-butyl, tert-butyl, phenyl, vinyl, or 3-(trimethoxy silyl) propyl, 3- (triethoxy silyl propyl) group; n is an integer and is arranged so that the polysilazane has a number average molecular weight of 150 -150,000 g/mol.

As a catalyst, basic catalyst especially N, N-diethyl ethanolamine, N, N-dimethylethanolamine, triethanolamine, triethylamine, 3-morpholino propyl amine, or N-heterocyclic compound is preferably used. Concentration of catalyst is generally in the range of 0.1-10 mol %, preferably 0.5 - 7 mol% based on polysilazane.

In one of the preferable embodiments, used is a solution containing perhydropolysilazane in which all of R₁, R₂ and R₃ are hydrogen atoms.

In one of the other preferable embodiments, the coating solution by the present invention contains at least one kind ofpolysilazane represented by Formula (III).

Formula (III): -(SiR₁R₂-NR₃)ₙ-(SiR₄R₅-NR₆)ₚ-

In above Formula, R₁, R₂, R₃, R₄, R₅, and R₆ each independently represent hydrogen or alkyl group, aryl group, vinyl group or (trialkoxy silyl) alkyl group which is substituted depending on the case; n and p are integers and n is arranged so that the polysilazane has a number average molecular weight of 150-150,000 g/mol.

Especially preferable is a compound in which R₁, R₃ and R₆ each represents hydrogen and R₂, R₄, and R₅ each represents methyl group; a compound in which R₁, R₃ and R₆ each represents hydrogen, R₂, R₄, and R₅ each represents methyl group and R₅ represents vinyl group; and a compound in which R₁, R₃, R₄ and R₆ each represents hydrogen, and R₂ and R₅ each represents methyl group.

Moreover, the solution containing at least one kind of polysilazane represented by Formula (IV) is also preferable.

Formula (IV): -(SiR₁R₂-NR₃)ₙ-(SiR₄R₅-NR₆)ₚ-(SiR₇R₈-NR₉)_{q}-

In above Formula, R₁, R₂, R₃, R₄, R₅, R₆, R₇, R₈ and R₉ each independently represent hydrogen or alkyl group, aryl group, vinyl group or (trialkoxy silyl) alkyl group which is substituted depending on the case; n, p and q are integers and n is arranged so that the polysilazane has a number average molecular weight of 150-150,000 g/mol.

Especially preferable is a compound in which R₁, R₃ and R₆ each represents hydrogen, and R₂, R₄, R₅ and R₈ each represents methyl group and R₉ represents (triethoxy silyl) propyl group and R₇ represents alkyl group or hydrogen.

Concentration of polysilazane in a solution is generally in the range of 1-80% by mass, preferably 5-501% by mass, especially preferable 10-40% by mass.

Especially preferable is a solvent which does not contain water and reactive group (for example, hydroxyl group or amine group) and is organic and non-protonic solvent inert to polysilazane. For example, listed are aliphatic or aromatic hydrocarbon, halogen hydrocarbon, esters such as ethyl acetate or butyl acetate, ketones such as acetone or methyl ethyl ketone, ethers such as tetrahydrofuran or dibutyl ether, and mono- and poly-alkyleneglycol dialkyl ether (diglymes), or mixture thereof.

An additional component to above mentioned polysilazane solution may be another binder commonly used in production of the coating material. For example, listed are cellulose ether and cellulose ester such as ethyl cellulose, cellulose nitrate, cellulose acetate or cellulose acetobutyrate, natural resin such as rubber or rosin resin, or synthetic resin such as polymerization resin or condensation resin, such as aminoplast especially urea resin and melamine formaldehyde resin, alkyd resin, acryl resin, polyester or modified polyester, epoxide, poly isocyanate or blocked polyisocyanate, orpolysiloxane.

Another component of polysilazane composition may be additives or inorganic nano particles such as SiO₂, TiO₂, ZnO, ZrO₂, or Al₂O₃, which affects, for example, viscosity of a composition, wettability to a ground, film forming property, lubrication or exhaust gas property.

By using the method of the present invention, dense and glass like layer can be produced which has excellent barrier function to gas due to no existence of cracks and pores.

A thickness of the formed coating layer is preferable in the range of 100 nm - 2 µm.

### (Ultraviolet absorber)

In the present invention, for the purpose of the degradation prevention by sunlight or ultraviolet radiation, an ultraviolet absorber can be added. It is preferable that the ultraviolet absorber is contained in any one of the constitution layers provided on the above-mentioned resin base material.

Ultraviolet absorbers include benzophenone based, benzotriazol based, phenyl salicylate based, triazine based ultraviolet absorber.

Specific examples of a benzophenone based ultraviolet absorber include: 2,4-dihydroxybenzophenone, 2-hydroxy-4-methoxybenzophenone, 2-hydroxy-4-n-octoxy-benzophenone, 2-hydroxy-4-dodecyloxy- benzophenone, 2-hydroxy-4-octadecyloxy-benzophenone, 2,2'-dihydroxy-4-methoxy benzophenone, 2,2'-dihydroxy-4,4'-dimethoxy benzophenone, and 2,2',4,4'-tetra-hydroxy benzophenone.

Specific examples of a benzotriazol based ultraviolet absorber include: 2-(2'-hydroxy-5-methyl phenyl) benzotriazol, 2-(2'-hydroxy-3',5'-di-t-butyl phenyl) benzotriazol, and 2-(2'-hydroxy-3'-t-butyl-5'-methyl phenyl) benzotriazol.

Specific examples of a phenyl salicylate based ultraviolet absorber include: phenyl salicylate, and 2-4-di-t-butylphenyl-3,5-di-t-butyl-4-hydroxy benzoate. Specific example of a hindered amine based ultraviolet absorber includes bis (2,2,6,6-tetra-methyl piperidine-4-yl) sebacate.

Specific examples of a triazine based ultraviolet absorber include: 2,4-diphenyl-6-(2-hydroxy 4-methoxy phenyl)-1,3,5-triazine, 2,4-diphenyl-6-(2-hydroxy-4-ethoxyphenyl)-1,3,5-triazine, 2,4-diphenyl-2-hydroxy-4-propoxy phenyl)-1,3,5-triazine,2,4-diphenyl(2-hydroxy-4-butoxyphenyl)-1,3,5-triazine, 2,4-diphenyl-6-(2-hydroxy-4-butoxyphenyl)-1,3,5-triazine,2,4-diphenyl-6-(2-hydroxy-4-hexyloxyphenyl)-1,3,5-triazine,2,4-diphenyl-6-(2-hydrooxy-4-octyloxyphenyl)-1,3,5-triazine, 2,4-diphenyl-6-(2-hydroxy4-dodecyloxyphenyl)-1,3,5-triazine, and 2,4-diphenyl-6-(2-hydroxy-4-benzyloxyphenyl)-1,3,5-triazine.

In addition to above compounds, ultraviolet absorber contains a compound having a function to transduce an energy of ultraviolet radiation into an intermolecular vibrational energy and then to release the vibrational energy as a heat energy. Furthermore, a compound which has an effect in combination with an antioxidant or a colorant, or a light stabilizer called a quencher which acts as a light energy conversion agent can be used together. However, to use the above-mentioned ultraviolet absorber, it is needed to choose ones in which an optical absorption wavelength of the ultraviolet absorber does not overlap with the effective wavelength of a photopolymerization initiator.

When using the usual ultraviolet radiation inhibitor, it is effective to use the photopolymerization initiator which generates a radical in visible light.

An amount of the ultraviolet absorber is 0.1 - 20% by mass, preferably 1-15% by mass, more preferably 3 -10% by mass. In a case of exceeding 20% by mass, adhesion becomes worse, and in a case of 0.1% by mass or less, the weather resistance improvement effect is small.

### (Thickness of whole Film mirror)

In view ofprevention ofbend, normal reflectance and handling of mirror, thickness of a whole film mirror according to the present invention is preferable 75 - 250 µm, more preferable 90 - 230 µm and still more preferable 100 - 220 µm.

### (Sunlight reflecting mirror)

The film mirror of the present invention can be preferably used to the purpose of condensing sunlight. The film mirror may be used singly as a sunlight reflecting mirror, but it is preferable to use as a sunlight reflecting mirror by sticking the film mirror on other base material, especially on a metallic base material, through a sticking layer coated on the farthest side of the film mirror from a light source.

When the reflecting device is used to the solar thermal power generation, an embodiment is a configuration in which the reflecting device has a form of a gutter (half cylindrical), the cylindrical component having a fluid inside is provided in the center section of a semicircle, the internal fluid is heated by condensing sunlight to a cylindrical component, and the heat energy is changed to generate electricity. Moreover, other embodiment includes a configuration in which plate-like reflecting devices are provided in plural places, the sunlight reflected with each reflecting device is condensed to one reflecting mirror (central reflecting mirror), and the heat energy obtained by reflection with a reflecting mirror is changed to generate electricity in a power generation part. Since high normal reflectance is required to the used reflecting device, the film mirror of the present invention is used especially preferably in the latter embodiment.

### <Sticking layer>

Sticking layer is not especially limited, but all of a dry lamination agent, a wet lamination agent, an adhesive, a heat-sealing agent and a hot melt agent are applicable, for example.

For example, polyester based resin, urethane based resin, polyvinyl acetate based resin, acrylics based resin, and nitrile rubber can be used.

The method for lamination is not especially limited, but in view of economical efficiency and productivity, it is preferable to laminate continuously by using a roll.

In view of adhesion effect and rate of drying, thickness of the sticking layer is preferable in the range of about 1 - 50 µm.

As long as protecting the silver reflective layer, any material may be used as other base material stuck with the film mirror of the present invention suitably adopted in the present invention. For example, used are: plastic film or sheet such as acryl film or sheet, polycarbonate film or sheet, polyarylate film or sheet, polyethylene naphthalate film or sheet, polyethylene terephthalate film or sheet, and fluorine film or sheet; resin film or sheet in which titanium oxide, silica, aluminum powder, copper powder is kneaded into; or resin film or sheet on which surface treatment is performed by coating the resin kneaded thereof or by metal vapor deposition.

Thickness of pasting film or sheet is not especially limited, but it is preferable in the range of 12 - 250 µm.

Moreover, these other base material may be stuck with the film mirror of the present invention by previously providing a concave portion or a convex portion before sticking together; or may be fabricated so that it may have a concave portion and a convex portion after sticking; or may be simultaneously stuck and fabricated a concave portion or a convex portion.

### <Metal base material>

As a metal base material of the sunlight collection mirror concerning the present invention, metal material with high heat conductivity, such as steel plate, copper plate, aluminum plate, aluminum-plating steel plate, aluminum based alloy-plating steel plate, copper-plating steel plate, tin-plating steel plate, chrome-plating steel plate, and stainless steel plate, can be used.

Especially in the present invention, it is preferable to use a metal-plating steel plate, a stainless steel plate, or an aluminum plate which has good corrosion resistance.

### EXAMPLES

Hereafter, although specific examples of the present invention are described, the present invention is not limited to these examples.

### [Preparation of Film mirror]

### (Preparation of Film mirror 1)

As a resin base material, biaxially-stretched polyester film (polyethylene terephthalate film, thickness of 100 µm) was used. On one side of the above-mentioned polyethylene terephthalate film, mixed resin of polyester resin (Polyester SP-181 produced by The Nippon Synthetic Chemical Industry Co., Ltd.), melamine resin (Super Beckamine J-820 produced by DIC), TDI based isocyanate (2,4-tolylene diisocyanate) and HMDI based isocyanate (1,6-hexamethylene diisocyanate) with a solid content ratio of 20 : 1 : 2 was coated by a gravure coating method to form an adhesive layer with 0.1 µm thickness. On the adhesive layer, formed was a silver reflective layer having thickness of 80 nm by a vacuum deposition method as a silver reflective layer. On the silver reflective layer, mixed resin of polyester resin and TDI (tolylene diisocyanate) based isocyanate with a solid content ratio of 10 : 2 was coated by a gravure coating method to form an upper adjacent layer with 0.1 µm thickness. Thus, Film mirror 1 was prepared as Comparative example.

### (Preparation of Film mirror 2)

In preparation of Film mirror 1, Film mirror 2 as Comparative example was prepared in the same manner as Film mirror 1, except for providing the following hard coat layer on the opposite side of the polyester film from the silver reflective layer.

### <Hard coat layer>

Coating liquid for hard court layer of the following composition was prepared. On the above-mentioned polyester film, the coating liquid was coated by a gravure coating method so as to coating thickness after curing being 3 µm and after evaporation drying, irradiated by the ultraviolet radiation exposure of 0.2 J/cm with a high pressure mercury vapor lamp. Thus, hard coat layer was prepared.

### <Coating liquid for Hard coat layer>

| | |
|---|---|
| Dipentaerythritol hexaacrylate | 70 parts by mass |
| Trimethylolpropne triacrylate | 30 parts by mass |
| Photoreaction initiator (Irgacure 184 (produced by BASF Japan)) | 4 parts by mass |
| Ethyl acetate | 150 parts by mass |
| Propylene glycol monomethyl ether | 150 parts by mass |
| Silicon compound (BYK-307 (produced by BYK-Chemie Japan)) | 0.4 parts by mass |

### (Preparation of Film mirror 3)

In preparation of Film mirror 1, Film mirror 3 as Comparative example was prepared in the same manner as Film mirror 1, except for forming a silicon oxide layer with 1 µm-thickness on the opposite side of the polyester film from the silver reflective layer which runs over a coating drum at a speed of 120 m/min according to the following steps: by using vacuum deposition equipment, exhausting until the ultimate vacuum of a chamber is to 3.0 x 10⁻⁵ torr (4.0 x 10⁻³ Pa), then introducing oxygen gas near a coating drum while maintaining the pressure in a chamber at 3.0 x 10⁻⁴ torr (4.0 x 10⁻² Pa), and heating and vapor-depositing silicon monoxide as an evaporation source with Pierced type electron gun with electric power of about 10 kW.

### (Preparation of Film mirror 4)

As a resin base material, biaxially-stretched polyester film (polyethylene terephthalate film, thickness of 100 µm) was used. On one side of the above-mentioned polyethylene terephthalate film, mixed resin of the above-mentioned polyester resin, the above-mentioned melamine resin, the above-mentioned TDI based isocyanate (tolylene diisocyanate) and HMDI based isocyanate with a solid content ratio of 20 : 1 : 1 : 2 was coated by a gravure coating method to form an adhesive layer with 0.1 µm thickness. On the adhesive layer, formed was a silver reflective layer having thickness of 80 nm by a vacuum deposition method as a silver reflective layer. On the silver reflective layer, mixed resin of polyester resin and TDI based isocyanate with a solid content ratio of 10 : 2 was coated by a gravure coating method to form an upper adjacent layer with 0.1 µm thickness. Furthermore, on the opposite side of the above-mentioned polyester film from the silver reflective layer, a hard court layer was provided by bar coating so as to be 500nm of thickness of the layer after drying by using 3% perhydro polysilazane liquid in dibutyl ether (NL120 produced by AZ Electric Materials). After air-drying for 3 minutes and annealing for 30 minutes in oven at 90 °C, Film mirror 4 was prepared as Comparative example.

### (Preparation of Film mirror 5)

In preparation of Film mirror 4, Film mirror 5 as Comparative example was prepared in the same manner as Film mirror 4, except for changing 3% perhydro polysilazane liquid to organic polysilazane (MHPS-20DB).

### (Preparation of Film mirror 6)

As a resin base material, biaxially-stretched polyester film (polyethylene terephthalate film, thickness of 100 µm) was used. On one side of the above-mentioned polyethylene terephthalate film, mixed resin of the above-mentioned polyester resin, the above-mentioned melamine resin, the above-mentioned TDI based isocyanate (tolylene diisocyanate) and HMDI based isocyanate with a solid content ratio of 20 : 1 : 1 : 2 was coated by a gravure coating method to form an adhesive layer with 0.1 µm thickness. On the adhesive layer, formed was a silver reflective layer having thickness of 80 nm by a vacuum deposition method as a silver reflective layer. On the silver reflective layer, mixed resin of polyester resin and TDI based isocyanate with a solid content ratio of 10 : 2 was coated by a gravure coating method to form an upper adjacent layer with 0.1 µm thickness. Furthermore, on the opposite side of the above-mentioned polyester film from the silver reflective layer, a hard court layer (the outermost layer) was provided by bar coating so as to be 500nm of thickness of the layer after drying by using 3% perhydro polysilazane liquid in dibutyl ether (NL120 produced by AZ Electric Materials), by air-drying for 3 minutes and then annealing for 30 minutes in oven at 90 °C. Furthermore, a water repellent agent (Aquanolan by AZ Electric Materials) was bar-coated onto the surface of the hard coat layer, whereby the outermost layer was reformed and Film mirror 6 was prepared as Inventive example of the present invention.

### (Preparation of Film mirror 7)

In preparation of Film mirror 6, Film mirror 7 as Inventive example of the present invention was prepared in the same manner as Film mirror 6, except for changing the hard coat layer to organic polysilazane (MHPS-20DB).

### (Preparation of Film mirror 8)

In preparation of Film mirror 6, Film mirror 8 as Inventive example of the present invention was prepared in the same manner as Film minor 6, except for forming the hard coat layer by the following sol-gel method.

### <Formation of Hard coat by Sol-gel method: Formation of Silica layer>

Into the polypropylene beaker, 0.04 mol of tetraethoxy silane (produced by Wako Pure Chemical Industries, Ltd.) was weighed, 0.25 mol of ethyl alcohol was added to it and agitated for 10 minutes with the magnetic stirrer, thereby a sol solution comprising an organometallic compound as a raw material was prepared. Furthermore, 0.24 mol of pure water was added and after agitating for 10 minutes, 1ml of 1 mol/l HCl was added, thereby Sol solution-1 was prepared. On the opposite side of the polyester film of Film mirror 6 from the silver reflective layer, the above-mentioned Sol solution-1 was coated by bar coating so as to be 500 nm of thickness of the layer. After drying in dry oven at 80 °C for 30 minutes, infrared irradiation for 0.5 seconds was repeated 10 times by 50 cm distance from coating side with a 1kW output using a near-infrared dryer (Paint dryer PDH1000 produced by Nihon Dennetsu Co.,Ltd.), thereby the hard coat layer was formed on the polyester base material.

### (Preparation of Film mirror 9)

In preparation of Film mirror 6, Film mirror 9 as Inventive example of the present invention was prepared in the same manner as Film mirror 6, except for forming the hard coat layer by the following sol-gel method.

### <Formation of Hard coat by Sol-gel method: Formation of Alumina layer>

Into the polypropylene beaker, 0.04 mol of aluminum isopropoxide (produced by Wako Pure Chemical Industries, Ltd.) was weighed, 025 mol of ethyl alcohol was added to it and agitated for 10 minutes with the magnetic stirrer, thereby a sol solution comprising an organometallic compound as a raw material was prepared. Furthermore, 0.24 mol of pure water was added and after agitating for 10 minutes, 1ml of 1 mol/l HCl was added, thereby Sol solution-2 was prepared. On the opposite side of the polyester film of Film mirror 6 from the silver reflective layer, the above-mentioned Sol solution-2 was coated by bar coating so as to be 500 nm of thickness of the layer. After drying in dry oven at 80 °C for 30 minutes, infrared irradiation for 0.5 seconds was repeated 10 times by 50 cm distance from coating side with a 1kW output using a near-infrared dryer (Paint dryer PDH1000 produced by Nihon Dennetsu Co.,Ltd.), thereby Film mirror 9 was prepared.

### (Preparation of Film mirror 10)

In preparation of Film mirror 6, Film mirror 10 as Inventive example of the present invention was prepared in the same manner as Film mirror 6, except for changing a water repellent agent to Beautiful G'ZOX Real glass coat produced by Soft 99.

### (Preparation of Film mirror 11)

In preparation of Film mirror 10, Film mirror 11 as Inventive example of the present invention was prepared in the same manner as Film mirror 10, except for forming a gas barrio layer comprising silicon oxide between the polyester film and the adhesive layer by the following vacuum deposition method before coating the adhesive layer on the polyester film.

### <Formation of Gas barrier layer by vacuum deposition method>

By using vacuum deposition equipment, exhausting until the ultimate vacuum of a chamber is to 3.0 x 10⁻⁵ torr (4.0 x 10⁻³ Pa), then introducing oxygen gas near a coating drum while maintaining the pressure in a chamber at 3.0 x 10⁻⁴ torr (4.0 x 10⁻² Pa), and heating and vapor-depositing silicon monoxide as an evaporation source with Pierced type electron gun with electric power of about 10 kW, whereby a gas barrier layer comprising silicon oxide with 1 µm-thickness was formed on polyester film f which runs over a coating drum at a speed of 120 m/min.

### (Preparation of Film mirror 12)

In preparation of Film mirror 11, Film mirror 12 as Inventive example of the present invention was prepared in the same manner as Film mirror 11, except for using a polyester film as a resin base material after incorporating 1% by mass ratio of Tinuvin 928 to polyester resin as an ultraviolet absorption agent in a polyester film.

### (Preparation of Film minor 13)

In preparation of Film mirror 12, Film mirror 13 as Inventive example of the present invention was prepared in the same manner as Film mirror 12, except for adding glycol dimercapto acetate as a corrosion inhibitor in each of the adhesive layer and the upper adjacent layer so that the quantity after coating was adjusted to be 0.2 g/m².

### (Measurement of Film mirrors 1-13)

For the above prepared polyester films of Film mirrors 1-13, contact angle with water and dynamic friction coefficient of the outmost layer at the opposite side of the silver reflective layer were measured.

The contents of the film mirror and contact angle of water and dynamic friction coefficient of the outmost layer are shown in Table 1.

**Table 1**

| Film mirror | Outermost layer | | Contact angle (°) | Dynamic friction coefficient | Gas barrier layer | UV absorber | Corrosion inhibitor | Remarks |
|---|---|---|---|---|---|---|---|---|
| | Compound | Surface treatment | | | | | | |
| 1 | Polyester resin | - | 75 | 0.39 | - | - | - | Comp. |
| 2 | Acryl resin | - | 72 | 0.37 | - | - | - | Comp. |
| 3 | Silicon oxide | - | 40 | 0.36 | - | - | - | Comp. |
| 4 | Silicon oxide | - | 30 | 0.35 | - | - | - | Comp. |
| 5 | Silicon oxide | - | 85 | 0.38 | - | - | - | Comp. |
| 6 | Silicon oxide | Present | 105 | 0.25 | - | - | - | Inv. |
| 7 | Silicon oxide | Present | 115 | 0.23 | - | - | - | Inv. |
| 8 | Silicon oxide | Present | 102 | 0.26 | - | - | - | Inv. |
| 9 | Aluminum oxide | Present | 95 | 0.29 | - | - | - | Inv. |
| 10 | Silicon oxide | Present | 135 | 0.21 | - | - | - | Inv. |
| 11 | Silicon oxide | Present | 135 | 0.21 | Present | - | - | Inv. |
| 12 | Silicon oxide | Present | 135 | 0.21 | Present | Present | - | Inv. |
| 13 | Silicon oxide | Present | 135 | 0.21 | Present | Present | Present | Inv. |

| | | | | | | | | |
|---|---|---|---|---|---|---|---|---|
| Inv.: Inventive example, Comp.: Comparative example | | | | | | | | |

### [Preparation of Sunlight reflecting mirror]

### (Preparation of Sunlight reflecting mirrors 1 to 13)

The above-mentioned Film mirrors 1-13 were cut to 4 cm long x 4 cm wide, stuck on an aluminum plate with a size of 0.1 mm thickness, 4 cm long x 5 cm wide, through an adhesion layer of 3 µm thickness and Sunlight reflecting mirrors 1-13 were prepared.

### [Evaluation of Sunlight reflecting mirror]

About the sunlight reflecting mirror obtained above, normal reflectance and weather resistance, and light resistance, pencil hardness, steel wool test and yellow discoloration were measured by the following method, respectively.

### <Measurement of Normal reflectance>

Spectrophotometer "UV265" by Shimadzu Corp. with an integrating sphere reflective attachment was modified so that an incidence angle of an incident light was adjusted to be 5° based on a normal line of the reflective surface, and the normal reflectance of the angle of reflection 5° was measured. Evaluation was measured as average reflectance from 350 nm to 700 nm.

### <Weather resistance test of normal reflectance>

In the same manner as above mentioned measurement of normal reflectance, measured was a normal reflectance of the film mirror after exposed under a condition of 85 °C, 85% RH for 30 days. A decreasing rate of the normal reflectance before and after a weather resistance test was calculated from the ratio of the normal reflectance of the film mirror before an enforced degradation to the normal reflectance of the film mirror after an enforced degradation. The criterion for evaluation of a weather resistance test is described below.
5: Decreasing rate of normal reflectance is less than 5%.
4: Decreasing rate of normal reflectance is 5% or more and less than 14%.
3: Decreasing rate of normal reflectance is 10% or more and less than 15%.
2: Decreasing rate of normal reflectance is 15% or more and less than 20%.
1: Decreasing rate of normal reflectance is 20% or more.

### <Light resistance test of normal reflectance>

After the obtained sample was exposed by ultraviolet irradiation for 7 days under an ambience of 65 °C by using EYE SUPER UV TESTER produced by Iwasaki Electric Co., Ltd., a normal reflectance was measured by the above-mentioned method, and the decreasing rate of the normal reflectance before and after ultraviolet irradiation was calculated. The criterion for evaluation of a light resistance examination is described below.
5: Decreasing rate of normal reflectance is less than 5%.
4: Decreasing rate of normal reflectance is 5% or more and less than 10%.
3: Decreasing rate of normal reflectance is 10% or more and less than 15%.
2: Decreasing rate of normal reflectance is 15% or more and less than 20%.
1: Decreasing rate of normal reflectance is 20% or more.

### <Pencil hardness test>

Based on JIS-K5400, a pencil hardness of each sample was measured in 45° inclination and 1kg load.

### (Steel wool test)

After spraying 10 ml of pure water using spray damping on the surface, reciprocatory sliding 10 times by applying friction load of 1000 g/cm² and by using #0000 steel wool, existence of the bruise on the subsequent surface was observed by visual observation. The criterion for evaluation is described below.
5: No bruise is observed.
4: Slight bruise is observed.
3: Bruise is observed, but practically non-problematic.
2: Many bruises are observed and practically problematic.
1: Remarkable bruises are observed.

### (Yellow color change)

After the obtained sample was exposed by ultraviolet irradiation for 7 days under an ambience of 65 °C by using EYE SUPER UV TESTER produced by Iwasaki Electric Co., Ltd., yellow color change was observed by visual observation. The criterion for evaluation is described below.
5: No color change is observed by visual observation.
4: Slight color change is observed by visual observation.
3: Color change is observed by visual observation, but practically non-problematic.
2: Color change is clearly observed and practically problematic.
1: Remarkable color change is observed.

The evaluation results are shown in Table 2.

**Table 2**

| Sunlight reflecting mirror | Normal reflectance (%) | Weather resistance | Light resistance | Pencil hardness | Steel wool test | Yellow color change | Remarks |
|---|---|---|---|---|---|---|---|
| 1 | 91 | 1 | 2 | 4B | 1 | 2 | Comp. |
| 2 | 92 | 1 | 1 | 2H | 3 | 1 | Comp. |
| 3 | 93 | 2 | 3 | 3H | 3 | 3 | Comp. |
| 4 | 94 | 3 | 3 | 3H | 3 | 3 | Comp. |
| 5 | 94 | 3 | 2 | 2H | 3 | 2 | Comp. |
| 6 | 96 | 4 | 4 | 5H | 4 | 4 | Inv. |
| 7 | 97 | 4 | 4 | 4H | 4 | 4 | Inv. |
| 8 | 94 | 4 | 4 | 3H | 4 | 4 | Inv. |
| 9 | 93 | 3 | 4 | 3H | 4 | 4 | Inv. |
| 10 | 96 | 4 | 4 | 5H | 5 | 4 | Inv. |
| 11 | 96 | 5 | 4 | 5H | 5 | 4 | Inv. |
| 12 | 96 | 5 | 5 | 5H | 5 | 5 | Inv. |
| 13 | 96 | 5 | 5 | 5H | 5 | 5 | Inv. |

| | | | | | | | |
|---|---|---|---|---|---|---|---|
| Inv.: Inventive example, Comp.: Comparative example | | | | | | | |

As can clearly seen from the evaluation result shown in Table 2, various characteristics of Examples according to the present invention were superior to Comparative Examples. Namely, the above-mentioned means of the present invention can provide a film mirror, a method for producing the same and a sunlight reflecting mirror which exhibits excellent bruise resistance and weather resistance.

## Claims

1. A film mirror comprising a resin base material, a silver reflective layer provided on the resin base material, and an outermost layer which comprises a material having a metalloxane skeleton and is provided on the outermost side on the side closer to a light source than the silver reflective layer,
wherein the outermost layer comprising the material having the metalloxane skeleton has a contact angle with water in the range from not less than 80° to less than 170° and has a dynamic friction coefficient in the range from not less than 0.10 to not more than 0.35.

2. The film mirror of claim 1 having a pencil hardness in the range from not less than H to not more than 7H.

3. The film mirror of claim 1 or 2 having the dynamic friction coefficient in the range from not less than 0.15 to not more than 0.25.

4. The film mirror of any one of claims 1 to 3 comprising a gas barrier layer provided on the side closer to the light source than the silver reflective layer.

5. The film mirror of any one of claims 1 to 4 wherein the resin base material is provided on the side closer to the light source than the silver reflective layer.

6. The film mirror of any one of claims 1 to 5, wherein the resin base material or at least one layer on the resin base material has an ultraviolet absorption agent.

7. The film mirror of any one of claims 1 to 6, wherein an adjacent layer to the silver reflective layer contains a corrosion inhibitor of silver.

8. A method for producing the film mirror of any one of claims 1 to 7 comprising a step of forming the silver reflective layer by a silver vapor deposition process.

9. A sunlight reflecting mirror using the film mirror ofany one of claims 1 to 7 or produced by the method of claim 8, formed by sticking the film mirror on a metal base via a sticking layer coated on the opposite side of the resin base material to the silver reflective layer.
